# EUROPÄISCHE PATENTANMELDUNG

(11) **EP 1 147 970 A2**
(43) Veröffentlichungstag der Anmeldung: **24.10.2001**
(21) Anmeldenummer: 01108362.3
(22) Anmeldetag: 03.04.2001
(51) Int. Cl.: B62D 21/11

(54) **Personenkraftwagen mit Einzelradaufhängung**

(30) Priorität: 19.04.2000 DE 10019391
(71) Anmelder: Bayerische Motoren Werke Aktiengesellschaft, 80809 München (DE)
(72) Erfinder: Resch, Christoph, 85049 Ingolstadt (DE); Schörghuber, Johann, 84079 Gündlkofen (DE)

(57) **Zusammenfassung**

Die Erfindung betrifft einen Personenkraftwagen mit Einzelradaufhängung an der Hinterachse, wobei jeweils zumindest zwei der die beiden Hinterachs-Radträger führenden Lenker an einem gemeinsamen Fahrschemel angebunden sind, der sich über mehrere Befestigungspunkte an der Fahrzeug-Karosserie abstützt, die beidseitig zwischen den Hinterrädern und Vorderrädern einen Längsträger aufweist. Erfindungsgemäß ist der Fahrschemel über eine im wesentlichen V-förmige Strebenkonstruktion zusätzlich zu seinen Befestigungspunkten direkt oder über einen die beiden Längsträger verbindenden Querträger indirekt an den beiden Längsträgern abgestützt. Bevorzugt ist die V-förmige Strebenkonstruktion an einer im wesentlichen in Fahrzeug-Querrichtung verlaufenden und zwei karosserieseitige Befestigungspunkte des Fahrschemels miteinander verbindenden Schubstrebe befestigt. Hierdurch wird die Heck-Querstabilität des PKW erheblich erhöht.

## Beschreibung

Die Erfindung betrifft einen Personenkraftwagen mit Einzelradaufhängung an der Hinterachse, wobei jeweils zumindest zwei der die beiden Hinterachs-Radträger führenden Lenker an einem gemeinsamen Fahrschemel angebunden sind, der sich über mehrere Befestigungspunkte an der Fahrzeug-Karosserie abstützt, die beidseitig zwischen den Hinterrädern und Vorderrädern einen Längsträger aufweist. Zum technischen Umfeld wird neben der DE 39 05 650 C1 insbesondere auf den Beitrag "Die neue Zentral-Lenker-Hinterachse der BMW 3er-Baureihe" in der Automobiltechnischen Zeitschrift ATZ 93(1991) Seite 274 ff. verwiesen.

Für übliche Einsatzbedingungen haben sich Einzelradaufhängungen nach dem Oberbegriff des Anspruchs 1 an Personenkraftwagen grundsätzlich bewährt, d.h. sie stellen zumeist einen nahezu optimalen Kompromiß zwischen dem nötigen Fahrkomfort einerseits und der gewünschten Fahrstabilität und Agilität andererseits dar. Ein Beispiel für eine derartige Hinterachs-Einzelradaufhängung ist im eingangs zweitgenannten ATZ-Beitrag ausführlich beschrieben, wobei ein wesentlicher Einflußfaktor auf das Fahrverhalten des Personenkraftwagens durch die sog. Elastokinematik gebildet wird, d.h. durch individuelle Lageveränderungen der Lenker unter Krafteinwirkung aufgrund deren mehr oder weniger elastischer endseitiger Anbindung.

Dabei sind nicht nur die die Radträger führenden Lenker elastisch am genannten Fahrschemel oder an der Fahrzeug-Karosserie angebunden, sonder es ist auch der Fahrschemel selbst - insbesondere zur Verringerung der Körperschall-Übertragung - unter Zwischenschaltung dämpfender und daher ebenfalls in gewissem Umfang elastischer Elemente letztlich an der Fahrzeug-Karosserie befestigt.

Zur Erzielung einer besonders ausgeprägten Agilität eine PKW's, die ein besonders sportliches Fahrverhalten insbesondere im Kurvenbereich ermöglicht, wäre eine vergrößerte Steifigkeit der Fahrzeug-Karosserie im Hinterachs- oder Heckbereich in der horizontalen Ebene wünschenswert, die aber zumindest in Fahrzeug-Querrichtung aus Bauraumgründen, nämlich bspw. im Hinblick auf das Erfordernis, einen Kraftstofftank unterbringen zu müssen, nicht ohne weiteres erzielbar ist.

Mit der vorliegenden Erfindung soll nun eine relativ einfache und dabei effektive Möglichkeit zur Erhöhung der Heck-Quersteifigkeit an einem Personenkraftwagen nach dem Oberbegriff des Anspruchs 1 aufgezeigt werden (=Aufgabe der vorliegenden Erfindung).

Die Lösung dieser Aufgabe ist dadurch gekennzeichnet, daß der Fahrschemel über eine im wesentlichen V-förmige Strebenkonstruktion zusätzlich zu seinen Befestigungspunkten direkt oder über einen die beiden Längsträger verbindenden Querträger indirekt an den beiden Längsträgern abgestützt ist. In einer bevorzugten Ausführungsform ist die V-förmige Strebenkonstruktion an einer im wesentlichen in Fahrzeug-Querrichtung verlaufenden und zwei karosserieseitige Befestigungspunkte des Fahrschemels miteinander verbindenden Schubstrebe des Fahrschemels befestigt.

Erfindungsgemäß ist somit der Fahrschemel, der naturgemäß in Fahrzeug-Querrichtung betrachtet relativ kurz ist, um nämlich die zu den einander gegenüberliegenden Hinter-Rädern bzw. Radträgern führenden Lenker aufnehmen zu können, über eine relativ einfache Konstruktion zusätzlich an den Längsträgern der Fzg.-Karosserie abgestützt, wobei ausdrücklich darauf hingewiesen sei, daß diese Abstützung nicht direkt, sondern auch indirekt erfolgen kann. So kann, wie angegeben, diese relativ einfache Konstruktion in Form einer V-förmigen (und somit den Buchstaben "V" abbildenden) Strebenkonstruktion mit den freien Enden der V-Schenkel auch an einem Querträger oder dgl. befestigt sein, der zwischen den beiden Längsträgern eingespannt bzw. an diesen befestigt ist. Zur Erzielung bester Ergebnisse sollten die freien Enden der V-förmigen Strebenkonstruktion dabei zumindest relativ nahe der beiden Längsträger am Querträger angebunden sein.

Grundsätzlich wird mit einer derartigen Konstruktion die Heck-Quersteifigkeit eines Personenkraftwagens deutlich erhöht, was gleichbedeutend ist mit einer Verringerung von Karosserieelastizitäten, die einen negativen Einfluß auf das (elasto-)kinematische Verhalten der PKW-Hinterachse haben können. Als Folge hieraus ergibt sich eine deutliche Verbesserung der Fahrdynamik und Agilität eines erfindungsgemäßen Personenkraftwagens. Im übrigen kann mit der erfindungsgemäßen Maßnahme zusätzlich die Torsionssteifigkeit der Karosserie erhöht werden, was insbesondere bei einer Cabriolet-Karosserie vorteilhaft zu Buche schlägt.

An dieser Stelle sei darauf hingewiesen, daß eine Versteifung einer selbsttragenden Kraftfahrzeugkarosserie über geeignet, bspw. V-förmig verlaufende Streben grundsätzlich bekannt ist, und zwar bspw. aus der DE 39 05 650 C1, jedoch ist kein Bezug zu bzw. keine Anbindung solcher Streben an einem Fahrschemel einer PKW-Hinterachse bekannt.

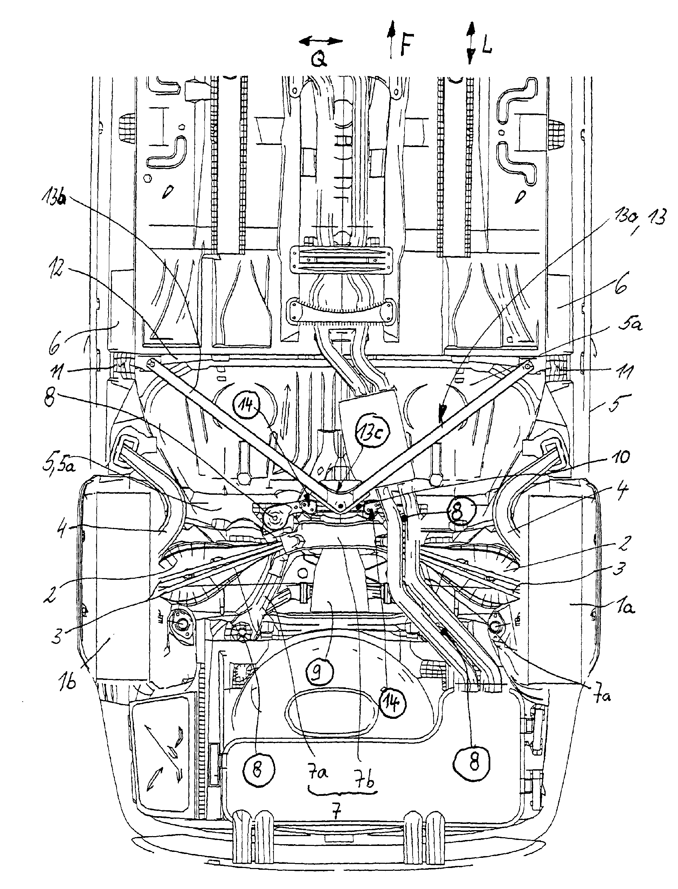

Im folgenden wird die Erfindung anhand eines bevorzugten Ausführungsbeispieles weiter erläutert, wobei die beigefügte einzige Figur eine Teilansicht von unten (auf den Unterboden) eines erfindungsgemäßen Personenkraftwagens zeigt. Erfindungswesentlich können dabei sämtliche näher beschriebenen Merkmale sein.

Mit der Bezugsziffer 1a ist das linke Hinterrad und mit der Bezugsziffer 1b das rechte Hinterrad eines Personenkraftwagens (PKW's) bezeichnet, die beide nur vereinfacht dargestellt sind. So sind bspw. die sog. Hinterachs-Radträger der beiden Hinterräder 1a, 1b nicht sichtbar, jedoch erkennt man die diese beiden Radträger tragenden bzw. führenden Lenker. Im einzelnen ist linksseitig sowie rechtsseitig jeweils ein oberer Quer-Lenker 2, ein unterer Quer-Lenker 3 sowie ein Längs-Lenker 4 vorgesehen. Somit handelt es sich bei dieser PKW-Hinterachse um eine Einzelradaufhängung.

Jeder Längs-Lenker 4 ist derart abgewinkelt ausgebildet, daß er das jeweilige Hinterrad 1a bzw. 1b passierend an einem jeweils im seitlichen Randbereich der Fahrzeug-Karosserie 5 in Fahrzeug-Längsrichtung L verlaufenden Längsträger 6a (linksseitig) bzw. 6b (rechtsseitig) befestigt sein kann, und zwar über eine nicht näher dargestellte, in unterschiedlichen Richtungen unterschiedlich elastische, gelenkige Anbindung.

Die beiden jedem Hinterrad 1a, 1b bzw. jedem Radträger zugeordneten Quer-Lenker 2, 3 verlaufen im wesentlichen parallel zueinander in einer zum Fzg.-Unterboden bzw. zum Untergrund senkrechten Ebene im wesentlichen in Fzg.-Querrichtung Q und sind mit ihrem dem Radträger abgewandten Ende jeweils an einem Fahrschemel 7 angelenkt bzw. gelenkig angebunden, wobei diese Anlenkung oder Anbindung ebenfalls elastisch oder in unterschiedlichen Richtungen unterschiedlich elastisch ausgebildet ist oder ausgebildet sein kann. Der obere, in der Figurendarstellung sozusagen hinter dem unteren Quer-Lenker 3 liegende obere Quer-Lenker 2 ist als relativ breitflächiges Blechpreßteil oder Gußteil ausgebildet, auf dem sich eine nicht gezeigte Schraubenfeder aufstützt, auf deren anderem Ende die Fahrzeug-Karosserie 5 aufliegt.

Auch der bereits erwähnte Fahrschemel 7 ist mit der Fzg.-Karosserie 5 bzw. mit deren Unterboden 5a verbunden, und zwar über vier Befestigungspunkte 8, die ihrerseits dämpfend und somit ebenso teilweise elastisch ausgebildet sind. Wie ersichtlich ist der Fahrschemel 7 in der gezeigten Ansicht im wesentlichen U-förmig, wobei sich zwei Befestigungspunkte 8 an den beiden freien Enden der U-Schenkel 7a des Fahrschemels 7 befinden, während die beiden anderen Befestigungspunkte 8 nahe der Übergangsbereiche dieser U-Schenkel 7a in eine Querstrebe 7b des Fahrschemels 7 liegen. Unterhalb dieser Querstrebe 7b (d.h. in der Figurendarstellung hinter derselben) befindet sich im übrigen ein vom Fahrschemel 7 aufgenommenes und dabei getragenes Hinterachsgetriebe 9, von dem nicht näher bezeichnete Antriebs-Gelenkwellen zu den beiden Hinterrädern 1a, 1b führen.

In Verbindung mit dem Fahrschemel 7 sei noch auf eine sog. Schubstrebe 10 hingewiesen, die die beiden in Fahrzeug-Fahrtrichtung (Pfeil F) vorderen Befestigungspunkte 8 desselben miteinander verbindet, die demzufolge in Fzg.-Querrichtung Q verläuft, und die ihrerseits über zwei Anschraubpunkte 14, die zwischen den Befestigungspunkten 8 liegen, am Unterboden 5a der Fzg.-Karosserie 5 befestigt ist.

Zur Versteifung der Fzg.-Karosserie 5 als solcher sind neben den bereits erwähnten seitlichen Längsträgern 6 weitere, teilweise auch in Fzg.-Querrichtung Q verlaufende Träger vorgesehen, von denen hier der im Bereich der C-Säulen 11 (diese verlaufen im wesentlichen senkrecht zur Zeichenebene) liegende und mit seinen Enden an den Längsträgern 6 befestigte und diese somit verbindende Querträger 12 von Bedeutung ist. An diesem Querträger 12 ist nahe dessen beiden Enden, d.h. nahe der Längsträger 6 eine sog. V-förmige Strebenkonstruktion 13 befestigt, über die der bereits genannte Fahrschemel 7 zusätzlich zu den bereits genannten Befestigungspunkten 8 an der Karosserie 5, genauer an den Längsträgern 6 abgestützt ist.

Im einzelnen wird die V-förmige Strebenkonstruktion 13 durch zwei bezüglich der Fzg.-Längsrichtung L und der Fzg.-Querrichtung Q im wesentlich diagonal verlaufende stabförmige Streben 13a, 13b gebildet, die über ein den V-Winkel der Strebenkonstruktion 13 bestimmendes Verbindungsglied 13c endseitig miteinander verbunden sind. Über dieses V-förmige Verbindungsglied 13c ist die V-förmige Strebenkonstruktion 13 indirekt mit dem Fahrschemel 7 verbunden, und zwar über die Schubstrebe 10, an der zentral das Verbindungsglied 13c über eine nicht näher dargestellte Schraubverbindung befestigt ist.

Ebenfalls über nicht näher dargestellte Schraubverbindungen sind die dem Verbindungsglied 13c abgewandten Enden der beiden Streben 13a, 13b am Querträger 12 befestigt, und zwar - bezüglich des PKW's - linksseitig (Strebe 13a) bzw. rechtsseitig (Strebe 13b) jeweils nahe des jeweiligen Längsträgers 6. Hier unter (nicht unbedingt erforderlicher) Zwischenschaltung des Querträgers 12 ist somit über die V-förmige Strebenkonstruktion 13 der Hinterachs-Fahrschemel 7 letztlich zusätzlich zu seinen Befestigungspunkten 8 auch an den beiden Längsträgern 6 der Fahrzeugkarosserie 5 bzw. des Fzg.-Aufbaus abgestützt.

Dies erhöht die Querstabilität im dargestellten Heckbereich des Personenkraftwagens erheblich, womit die vor der Beschreibung dieses Ausführungsbeispieles genannten Vorteile erzielt werden. Dabei sei ausdrücklich darauf hingewiesen, eine Vielzahl von Details insbesondere konstruktiver Art durchaus abweichend vom gezeigten Ausführungsbeispiel gestaltet sein kann, ohne den Inhalt der Patentansprüche zu verlassen. So kann die V-förmige Strebenkonstruktion 13 mit ihren freien Enden auch direkt an den beiden Längsträgern 6 befestigt sein, ggf. unter Zwischenschaltung geeigneter Dämpfungselemente. Ferner kann die V-förmige Streben-Konstruktion 13, die im übrigen auch eine andere Gestalt aufweisen kann, auch direkt - d.h. ohne Ziwschenschaltung der Schubstrebe 10 - am Fahrschemel 7 angelenkt sein, ggf. ebenfalls unter Zwischenschaltung eines geeigneten Dämpfungselementes. Stets verbessert sich am PKW die Fahrdynamik und die Agilität aufgrund der über die erfindungsgemäß befestigte V-förmige Strebenkonstruktion 13 verringerten Karosserieelastizitäten, die ansonsten einen negativen Einfluß auf das (elasto-)kinematische Verhalten der PKW-Hinterachse haben können.

### Bezugszeichenliste:

- 1a,b: Hinterrad
- 2: oberer Quer-Lenker
- 3: unterer Quer-Lenker
- 4: Längs-Lenker
- 5: Fzg.-Karosserie
- 5a: Unterboden
- 6: Längsträger
- 7: Fahrschemel
- 7a: U-Schenkel (von 7)
- 7b: Querstrebe (von 7)
- 8: Befestigungspunkt (von 7 an 5, 5a)
- 9: Hinterachs-Getriebe
- 10: Schubstrebe
- 11: C-Säule
- 12: Querträger
- 13: V-förmige Strebenkonstruktion
- 13a,b: Strebe (von 13)
- 13c: Verbindungsglied (von 13)
- 14: Anschraubpunkt (von 10 an 5a)
- L: Fzg.-Längsrichtung
- Q: Fzg.-Querrichtung
- F: Fahrtrichtung

## Patentansprüche

1. Personenkraftwagen mit Einzelradaufhängung an der Hinterachse, wobei jeweils zumindest zwei der die beiden Hinterachs-Radträger führenden Lenker (3, 4) an einem gemeinsamen Fahrschemel (7) angebunden sind, der sich über mehrere Befestigungspunkte (8) an der Fahrzeug-Karosserie (5) abstützt, die beidseitig zwischen den Hinter-rädern und Vorderrädern einen Längsträger (6) aufweist,
**dadurch gekennzeichnet, daß** der Fahrschemel (7) über eine im wesentlichen V-förmige Strebenkonstruktion (13) zusätzlich zu seinen Befestigungspunkten (8) direkt oder über einen die beiden Längsträger (6) verbindenden Querträger (12) indirekt an den beiden Längsträgern (6) abgestützt ist.

2. Personenkraftwagen nach Anspruch 1,
**dadurch gekennzeichnet, daß** die V-förmige Strebenkonstruktion (13) an einer im wesentlichen in Fahrzeug-Querrichtung (Q) verlaufenden und zwei karosserieseitige Befestigungspunkte (8) des Fahrschemels (7) miteinander verbindenden Schubstrebe (10) befestigt ist.
